# EUROPEAN PATENT APPLICATION

(11) **EP 1 975 782 A1**
(43) Date of publication of application: **01.10.2008**
(21) Application number: 07006454.8
(22) Date of filing: 29.03.2007
(51) Int. Cl.: G06F 9/44

(54) **Method and system for displaying a graphical screen**

(71) Applicant: SIEMENS AKTIENGESELLSCHAFT, 80333 München (DE)
(72) Inventor: Corsini, Giorgio, 16148 Genova (IT); Noferi, Stefano, 16149 Genova (IT)
(74) Representative: Fischer, Michael

(57) **Abstract**

It is the aim of the present invention to provide a method and a system for displaying a graphical screen which optimally fits the client browser dimensions at run-time without requiring the use of scrollbars.

The aforementioned aim is achieved according to the present invention by a method for displaying a graphical screen, comprising the steps of:
a) creating an object capable of resizing the graphical screen;
b) inserting the object in the graphical screen at design time;
c) displaying of the graphical screen at the client, at run time, the object is rendered so as to perform the following sub-steps:
c1) get the original graphical screen dimensions;
c2) get browser target dimensions;
c3) calculate the scaling factor in order to fit the graphical screen to the browser dimensions; wherein two embodiments are possible for calculating the scaling factor:
i) preferably with no deformation: same scaling factor applied to width and height;
ii) exceptionally with deformation where two different scaling factors applied to width and height;

d) apply the scaling factor(s) to the page that is to be loaded.

## Description

The present invention relates to a method and a system for displaying a graphical screen.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bi-directional communication."

The functions that a MES system usually includes are resource allocation and status, dispatching production orders, data collection/acquisition, quality management, maintenance management, performance analysis, operations/detail scheduling, document control, labor management, process management and product tracking.
Thus, the goal of MES systems is to provide manufacturing companies with tools for measuring and controlling production activities with the aim of boosting profitability, increasing productivity, improving quality and process performance to manufacturing plants.

MES systems are provided with front-end/client GUI applications showing what MES systems are currently doing. MES GUI applications display to the end-user graphical screens which summarize the state of certain parameters of an industrial plant at a certain moment in time.

The technical term "graphical screen" here denotes a screen that contains information displayed in a graphic mode, in a text mode, in a table mode or in any other format understandable by the end-users.

MES GUI applications play a key role in bringing together process, quality and business information from various sources into one unified real-time view of the production status of the plant.

In state of the art MES systems, the MES GUIs are web-browser so that no further program installation is required at the client side.

The web-browser or browser, in the context of this invention, is defined as the client application which displays the graphical screens at the client side at run-time. Examples of web-browsers include Internet Explorer, Netscape, Modzilla, Firefox and others.

Graphic designers or system engineers, at design time, are faced with the challenge to design cross-functional graphical screens which are going to be displayed, at run time, by browsers within client monitors having a large variety of resolutions and by browser windows having a large variety of sizes.

In order to design the graphical screens, graphic designers typically use "ad-hoc" graphical tool-kits provided together with the MES system. For example, SIMATIC IT, the MES system provided by Siemens, comes together with its web-based proprietary graphical tool-kit called SIMATIC IT Client Application Builder (CAB), which is based on Microsoft ASP.NET technology. Typically MES graphical screens contain a large set of graphical objects.

For this reason, in most common scenarios, the graphical screens are displayed by the client browser in full-screen mode in order to exploit at most the resolution of the video so that as much information as possible is displayed.

In other possible scenarios, e.g. with pop-up window or during window resizing performed by the end-users at run-time, the graphical screens are displayed by the browsers in smaller sizes, with dimensions smaller than the video dimensions.

In any of the above scenarios, when the graphical screens to be displayed are bigger than the browser dimensions, scrollbars appear on the sides of the browser windows in order to allow the user to center the page and display the desired information.

Unfortunately, typical end-users, e.g. plant operators do not deal with scrollbars in an easy manner, either because they are not accustomed to use them or because such scrollbars require time-consuming manual interventions in order to interact with the MES system.

Thus, the well-known method of using scrollbars for displaying MES information at the client browser has the drawback of not being appreciated by the end-users.

Moreover, another drawback of scrollbars is that there is the risk that some critical information are hidden in the part of the graphic-screen not displayed by the web-browser.

In order to prevent the end-users to deal with the above mentioned drawbacks of interacting with scroll-bars and to risk of displaying information only partially, the system engineers are required to design graphical screens that fit at best the monitors/videos of the plant computers.

A first known method of designing graphical screens by system engineers consists in drawing one fixed graphical screen, with predefined dimensions expressed in pixels, that fit at best the typical target video resolution of plant computers. For example, the system engineers make the assumption that most of plant computers/servers have a video resolution of 1024x768 pixels and thus they draw, at design time, for each required graphical screen, a graphical screen having pixel dimensions of about 1024x768, so that when such graphical screen is displayed, at run time, in a full screen mode. However, in case, the target video have smaller video resolutions, then the graphical screen window, at run time, is displayed with scrollbars on the sides.

The drawback of this first method is that a compromise is made to fit most of the target screens, leaving some cases in which scrollbars are still needed.

A second known method of designing graphical screens by system engineers consists in designing a set of graphical screens, with a set of predefined dimensions expressed in pixels, which can accommodate a different set of resolutions of the target monitors.

For example, the system engineers assume that most of plant computers/servers have three or four typical video resolutions and thus they draw, at design time, for each required graphical screen, three or four graphical screens having pixel dimensions fitting at best, at run time, the target videos. Thus, when the client browser requests the web-server to load a new graphical screen, it also notifies its screen resolution in pixels and, in accordance with the notified information, the appropriate graphical screen is loaded.

A drawback of this second method is that it requires longer developing/design time for the system engineers/designers since they have to draw several graphical screens.

Moreover this second method it is not optimal, for example, if new video resolutions/sizes not previously foreseen, are used, then the predesigned graphical screens may not fit the target videos.

A third known method of designing graphical screens by system engineers consists in writing a specific piece of programming code which performs automatic resizing of the graphical screens in accordance with the client browser dimension and the target monitor resolutions.

The drawback of this third method is that the designer must have the skills of writing such piece of programming code. This is not a simple task since the written programming code has to fit a large variety of graphic object types and of any number of object types contained in the graphical screen.

It is therefore aim of the present invention to overcome the above-mentioned drawbacks, in particular by providing a method and a system for displaying a graphic-screen which optimally fits the client browser dimensions at run-time without requiring the use of scrollbars.

The aforementioned aim is achieved according to the present invention by a method for displaying a graphical screen, comprising the steps of:
a) creating an object capable of resizing the graphical screen;
b) inserting the object in the graphical screen at design time;
c) displaying of the graphical screen at the client, at run time, the object is rendered so as to perform the following sub-steps:
   c1) get the original graphical screen dimensions;
   c2) get browser target dimensions;
   c3) calculate the scaling factor in order to fit the graphical screen to the browser dimensions; wherein two embodiments are possible for calculating the scaling factor:
      i) preferably with no deformation: same scaling factor applied to width and height;
      ii) exceptionally with deformation where two different scaling factors applied to width and height;
d) apply the scaling factor(s) to the page that is to be loaded.

With reference to the system, this aim achieved by the corresponding system as given in claim 3.

These features enable the system engineers to draw, at design time, graphical screens without performing any complex programming activity. They enable the end-user to display, in an easy manner, at run time, graphical screens without the need of interacting with window-scrollbars.

The invention will now be described in preferred but not exclusive embodiments with reference to the accompanying drawing, wherein:
- Figure 1: is a snapshot of an exemplary graphical screen at run-time (Prior Art);
- Figure 2: is a snapshot of an exemplary window of a graphic tool-kit, at design time, in an example embodiment according to the present invention;
- Figure 3: is a snapshot of an exemplary window of a graphical screen, at run time, in an example embodiment according to the present invention;

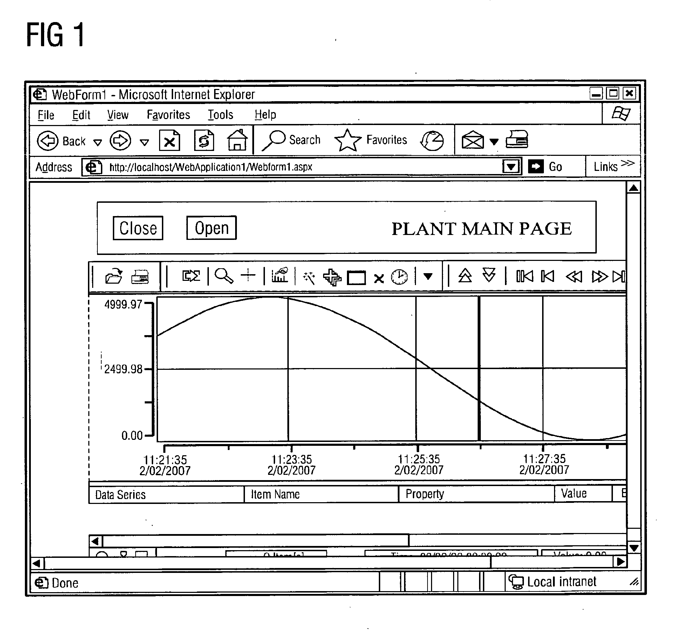

The graphical screen as shown in Figure 1 would be displayed as in Figure 1 without the use of the present invention. In this case, two buttons (on the right) and part of the graph are hidden to the user which requires him to use scrollbars.

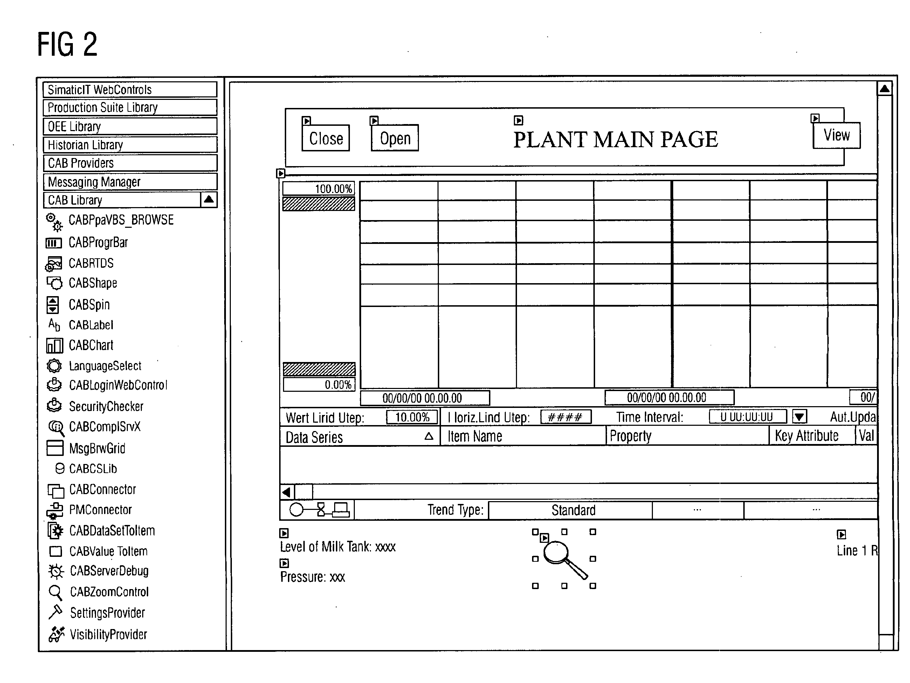

Figure 2 shows the screen seen by the designer/developer at design time. On the left side are the buttons of the toolbox objects for creating a graphical screen within SIMATIC CAB. For example, the CAB Label button allows to insert a text string in the graphical screen. The CAB Zoom Control button, which is for example represented by a magnifying glass, corresponds to the object of the present invention that can be dragged and droped by the designer inside the graphical screen as shown in the lower center part of the window.

At design time the designer is now required to drag&drop this object into the graphical screen. The result is shown in the Figure 2, where the object of the invention is identified by the magnifier glass in the lower part of the screen.

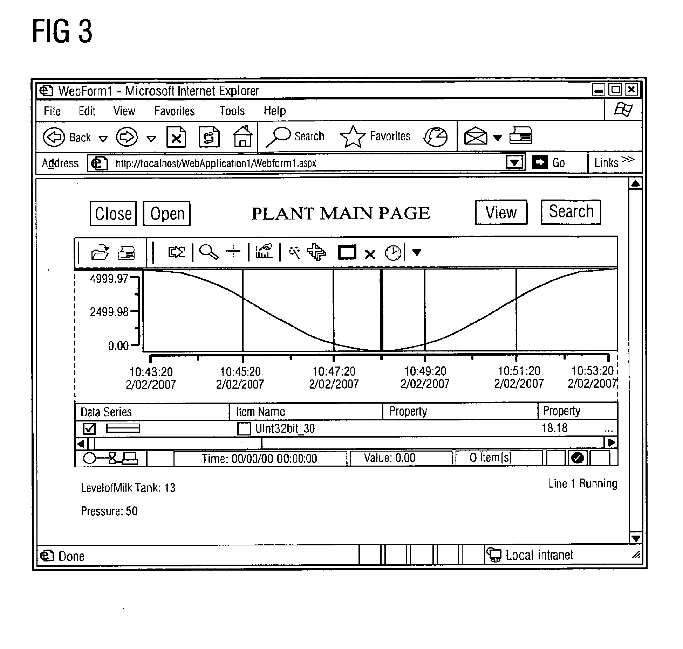

Figure 3 now shows the respective window of the web-browser at run time derived from the development according to Figure 2. At run time, all the graphical objects of the graphical screen are correctly displayed.

The invention allows to display a graphical screen at browser dimensions so the user is not required to scroll the page in order to perform an operation or display some piece of information. Preferably, the browser dimensions/resolution are the same as the monitor dimensions/resolution. In other embodiments, when a plurality of windows are opened simultaneously by the user, then the browser dimensions/resolution are smaller than the monitor dimensions/resolution.

The innovative content of the idea is that the designer/system engineer can easily adapt a page to behave in this way, even if it was a previously designed page, simply inserting in the page a .NET object (WEB CONTROL) that renders a script that is expanded into a section of code and then executed as follows:
1. Get the original graphical screen dimensions (width and height expressed in pixel);
2. Get browser target dimensions (likewise);
3. Calculate the scaling factor in order to fit the graphical screen to the browser dimensions ("fit" shall be understood as large as possible); wherein two embodiments are possibile for calculating the scaling factor:
   i) No deformation (preferred): same scaling factor applied to width and height;
   ii) With deformation (in particular situations): two different scaling factors applied to width and height
4.Apply the scaling factor to the page that is to be loaded.

This script is automatically rendered by the .NET Object previously inserted at design time and it is executed:
A) when the page is loaded in the browser;
B) when the client area dimension changes (e.g. during window resizing performed by the user).

The common step between case A) and case B) is that in both cases the client asks the web-server to display a graphical screen. It has to be noted from the terminological point of view, that there are two graphical screens: a first graphical screen designed by the system engineer/designer at design time level and a second graphical screen displayed for the user at run time as shown in Figures 2 and 3 resp.

At design time, the designer is only required to drag&drop this object into the graphical screen. Once the resizing object has been placed in the graphical screen and it is loaded at runtime, it is visualized in an entire format by maintaining original size proportions.

This object is structured as a web control that is a standard .NET object placeable on a graphical screen and managed by a web-server. When the graphical screen is loaded, the web server processes the web control. When the graphical screen is opened by the client web-browser, via a request to a web-server, the present invention renders a script java (or visual basic script) to resize the graphical screen in order to display the whole information contained.

The .NET Object is used to update a CAB screen to render script code for zoom management. The object may preferably be written in C+ Microsoft programming language. When the object is opened it renders a java script or visual basic script. In case the user performs a resizing of the web-browser (case B above), then the resizing events are notified to the web-server and captured by the resizing scripts and the factor calculation is performed newly.

### List of used acronyms

ASP Active Server Pages
MES Manufacturing Execution System
IT Information technology
ERP Enterprise Resource Planning

## Claims

1. A method for displaying a graphical screen, comprising the steps of:
a) creating an object capable of resizing the graphical screen;
b) inserting the object in the graphical screen at design time;
c) displaying of the graphical screen at the client, at run time, the object is rendered so as to perform the following sub-steps:
c1) get the original graphical screen dimensions;
c2) get browser target dimensions;
c3) calculate the scaling factor in order to fit the graphical screen to the browser dimensions; wherein two embodiments are possible for calculating the scaling factor:
i) preferably with no deformation: same scaling factor applied to width and height;
ii) exceptionally with deformation where two different scaling factors applied to width and height;
d) apply the scaling factor(s) to the page that is to be loaded.

2. The method according to claim 1, wherein the object is a .net object.

3. A system for displaying a graphical screen, comprising the steps of:
a) means for creating an object capable of resizing the graphical screen;
b) means for inserting the object in a graphical screen at design time;
c) means for displaying of the graphical screen at the client, at run time, the object is rendered so as to perform the following sub-steps:
c1) get the original graphical screen dimensions;
c2) get browser target dimensions;
c3) calculate the scaling factor in order to fit the graphical screen to the browser dimensions; wherein two embodiments are possible for calculating the scaling factor:
i) preferably with no deformation : same scaling factor applied to width and height;
ii) exceptionally with deformation where two different scaling factors applied to width and height;
d) means to apply the scaling factor(s) to the page that is to be loaded.

4. The system according to claim 3, wherein the object is a .net object.
